# EUROPÄISCHE PATENTSCHRIFT

(11) **EP 2 358 541 B1**
(45) Veröffentlichungstag und Bekanntmachung des Hinweises auf die Patenterteilung: **09.09.2015**
(21) Anmeldenummer: 09795897.9
(22) Anmeldetag: 17.11.2009
(51) Int. Cl.: B05D 5/06, B05D 7/00, B41M 5/00, B41M 7/00, B05D 1/02, C09D 11/30, C09D 11/322, B05D 1/26

(54) **VERFAHREN ZUM AUFBRINGEN EINER BESCHICHTUNG MITTELS INKJET-DRUCKVERFAHREN**
METHOD FOR APPLYING A COATING BY INK JET PRINTING METHODS
MÉTHODE POUR APPLIQUER UN REVÊTEMENT AU MOYEN DE PROCÉDÉS D'IMPRESSION À JET D'ENCRE

(30) Priorität: 19.12.2008 DE 102008063837
(43) Veröffentlichungstag der Anmeldung: 24.08.2011
(73) Patentinhaber: Mankiewicz Gebr. & Co. GmbH & Co KG, 21107 Hamburg (DE)
(72) Erfinder: DE ROSSI, Umberto, 22844 Norderstedt (DE); RÜTER, Veronica, 22549 Hamburg (DE); AMMAN, Klaus, 88356 Ostrach Burgweiler (DE)
(86) Internationale Anmeldenummer: PCT/DE2009/001612
(87) Internationale Veröffentlichungsnummer: WO 2010/069286

(56) Entgegenhaltungen:
- US-A1- 2007 085 983
- US-A1- 2008 192 102

## Beschreibung

Die vorliegende Erfindung betrifft Beschichtungen und Verfahren zur Oberflächenveredelung, insbesondere zur Herstellung beständiger und stabiler Oberflächenbeschichtungen unter Verwendung von Inkjet-Druckverfahren.

Unter dem Begriff Inkjet-Technologie werden im Folgenden sowohl Tintenstrahl- als auch Drop-on-demand-Verfahren verstanden. Insbesondere können in den Drop-on-demand-Verfahren Tinten beliebiger Zusammensetzung verwendet werden. Die Inkjet-Technologie ist eine digitale Drucktechnik, die es ermöglicht, ohne eine Erhöhung der Rüstzeiten auch sehr kleine Auflagen bzw. Stückzahlen bis hin zu einem einzigen Exemplar herzustellen. Somit ist diese Technik zur Individualisierung von Objekten hervorragend geeignet.

Darüber hinaus handelt es sich um eine Non-Impact-Technologie, d.h. die Druckköpfe kommen nicht mit dem zu bedruckenden Medium oder Substrat in Kontakt. Dies ermöglicht die problemlose Bedruckung einer Vielzahl von Materialien.

Bisher ist die Anwendung der Inkjet-Technologie allerdings beschränkt auf Medien, welche an sich nur geringen Ansprüchen an die mechanischen und chemische Beständigkeit und an die Auflösung genügen, oder auf Medien, deren Beständigkeiten und Auflösung durch eine geeignete Vorbehandlung verbessert werden wie z. B. spezielle Inkjet-Papiere. Unter der Auflösung wird in diesem Zusammenhang die gedruckte Auflösung verstanden, die sich durch die Tropfengröße und die Positioniergenauigkeit des Druckkopfes ergibt. Gedruckte Auflösungen liegen bei üblichen Bürodruckern (Office-Bereich) im Bereich bis zu 2880 dpi, bei industriellen Anwendungen (Industriebereich) im Bereich von 360 dpi bis 1440 dpi.

Auch sind die üblicherweise in den Inkjet-Druckverfahren eingesetzten Tinten in der Regel nicht ausreichend stabil und beständig, um in Bereichen mit hohen mechanischen oder physikalisch-chemischen Belastungen, wie sie beispielsweise im Außenbereich auftreten, eingesetzt werden zu können.

Aus EP 1 821 576 A1 und EP 1 860 923 A1 sind Verfahren zur Herstellung von elektroluminenszenten Anzeigetafeln bekannt, in denen auf eine Seite eines Substrats flächige Elektroden und auf die andere Seite des Substrats Bilder mittels Tintenauftrag durch ein inkjet-Druckverfahren aufgebracht werden. Um diese Bedruckungen gegenüber mechanischen und chemischen Belastungen zu schützen, wird jeweils eine weitere Schicht über den entsprechenden Aufdruck laminiert.

Aus US 2008/0192102 A1 ist ein Verfahren zur Herstellung von Sicherheitsetiketten bekannt, in dem auf eine nur partiell ausgehärtete tintenaufnehmende Schicht zwei sich teils überlappende Muster oder Bilder mittels inkjet-Druckverfahren aufgetragen werden. Der ausgehärtet Aufbau wird dann durch das Aufbringen einer weiteren strahlungshärtende Beschichtung oder durch das Aufbringen einer Folie geschützt.

Aus US 2007/0085983 A1 ist ein Verfahren zur Dekorierung von Fliesen aus Keramik, Metall oder Kunststoff für den Aussenbereich bekannt, in dem zunächst ein zubedruckender Film aufgebracht und thermisch ausgehärtet wird, der Film mittels Inkjet-Verfahren mit Muster, Bildern oder Dekoren bedruckt wird und anschließend ein Schutzfilm aufgebracht und thermisch ausgehärtet wird.

Die Inkjet-Druckverfahren ermöglichen hohe Auflösung und hohe Druckgeschwindigkeiten, die darüber hinaus frei definierbar und stufenlos regelbar sind. Daher sind sie auch für inline-Dekorations- und Veredelungsprozesse geeignet. Sie lassen sich an die Produktionsabläufe anpassen, so dass die Produktionsabläufe, insbesondere die Geschwindigkeit, beibehalten werden können.

Einschränkungen im inline-Betrieb sind allerdings durch die notwendige Trocknung der eingesetzten Tinten gegeben. Die Bedruckung mit wässrigen Tinten wird daher in der Regel bei porösen Medien eingesetzt, so dass eine ausreichende Festigkeit der aufgebrachten Schicht vor dem nächsten Arbeitsschritt gegeben ist. Für den Einsatz von lösemittelhaltigen Tinten wird vor dem folgenden Bearbeitungsschritt eine entsprechende Trockungsstrecke benötigt, die in bestehenden Prozessen oftmals nicht zur Verfügung steht.

Aus US 4,906,170 ist ein Verfahren zur Beschriftung von Kunststoffrohren mittels Inkjet-Drucker bekannt, in dem der Druckeinheit eine Trocknungsstrecke nachgeschaltet ist. Die Trocknungsstrecke ist ausreichend lang, um ein Verwischen der Bedruckung im nächsten Schritt zu vermeiden.

Aufgrund der genannten Nachteile, vor allem im Bereich der Beständigkeiten, werden Inkjet-Druckverfahren in industriellen Prozessen zur Oberflächenveredelung bisher nicht eingesetzt.

Es ist somit Aufgabe der vorliegenden Erfindung, verbesserte Oberflächenveredelungen zur Verfügung zu stellen, die es insbesondere erlauben, die Vorteile der Inkjet-Technologie zu nutzen.

Gelöst wird diese Aufgabe durch ein Verfahren gemäß Anspruch 1. Bevorzugte Ausführungsformen offenbaren die Unteransprüche und die Beschreibung.

Die erfindungsgemäße Beschichtung umfasst eine erste Schicht, welche eine farbliche Darstellung wie z.B. ein Muster durch das Aufbringen farbiger Tinten mit Hilfe eines Inkjet-Druckers realisiert. Auf dieser ersten Schicht ist eine zweite, durchsichtige Schicht angeordnet, welche zumindest einen Topcoat aufweist, welche die erste, farbige Schicht schützt.

In einer bevorzugten Ausführungsform werden übliche, für das Inkjet-Verfahren geeignete Tinten eingesetzt. Geeignete Tinten enthalten beispielsweise Pigmente, Oligomere, Reaktivverdünner und andere dem Fachmann geläufige Additive. Geeignete Pigmente sind beispielsweise Pigment Yellow 213, PY 151, PY 93, PY 83, Pigment Red 122, PR 168, PR 254, PR 179, Pigment Red 166, Pigment Red 48:2, Pigment Violet 19, Pigment Blue 15:1, Pigment Blue 15:3, Pigment Blue 15:4, Pigment Green 7, Pigment Green 36, Pigment Black 7 oder Pigment White 6. Geeignete Oligomere sind beispielsweise aliphatische und aromatische Urethanacrylate, Polyetheracrylate und Epoxyacrylate, wobei die Acrylate mono- oder polyfunktionell sein können z.B. di-, tri- bis zu hexa- und decafunktionell. Geeignete Reaktivverdünner sind beispielsweise Dipropylenglykoldiacrylat, Tripropylenglykoldiacrylat, Tetrahydrofurfurylacrylat, Isobornylacrylat und Isodecylacrylat. Darüber hinaus können der Tinte zur Einstellung ihrer Eigenschaften weitere Additive zugesetzt werden wie beispielsweise Dispergieradditive, Entschäumer, Photoinitiatoren und UV-Absorber.

Erfindungsgemäß werden UV-härtende Tinten eingesetzt, die vergleichsweise schnell aushärten und somit eine schnelle Weiterbearbeitung ermöglichen. Jedoch auch wasser- oder lösemittelhaltige Tinten sind geeignet.

Besonders geeignet sind Tinten, die bei der Jetting-Temperatur eine Viskosität im Bereich vom 2 bis 80 mPas aufweisen, und die im gehärteten Zustand eine Oberflächenenergie im Bereich von 20 bis 50 mN/m, bevorzugt im Bereich von 25 bis 40 mN/m, besonders bevorzugt im Bereich von 26 bis 35 mN/m, haben.

Es können übliche Topcoats eingesetzt werden. Geeignete Topcoats sind beispielsweise Produkte auf der Basis von einkomponentigen (1K) oder zweikomponentigen (2K) isocyanat-vernetzenden Systemen (Polyurethane) oder auf der Basis von 1K- oder 2K-Epoxy-Systemen (Epoxidharze). Erfindungsgemäß bevorzugt werden 2K-Systeme eingesetzt. Der erfindungsgemäß eingesetzte Topcoat kann transparent oder lasierend sein.

In zweikomponentigen isocyanat-vernetzenden Systemen werden als Härterkomponente Isocyanate eingesetzt wie beispielsweise Hexamethylendiisocyanat(HDI)-, Diphenylmethandiisocyanat(MDI)-, Isophorondiisocyanat(IPDI)- oder Toluidindiisocyanat(TDI)-basierte Oligomere z.B. Isocyanurate, Biuret, Allophanate und Addukte aus den genannten Isocyanaten mit multivalenten Alkoholen sowie deren Mischungen. Als Bindemittelkomponente werden Polyole eingesetzt wie beispielsweise OH-gruppenhaltige Polyester, Polyether, Acrylate und Polyurethane sowie deren Mischungen, wobei die Polyole lösemittelbasiert, lösemittelfrei oder wasserverdünnbar sein können.

In zweikomponentigen Epoxy-Systemen werden als Bindemittelkomponente Epoxidharze eingesetzt wie beispielsweise Glycidylether von Bisphenolen wie Bisphenol A oder F und epoxidierte aliphatische Grundkörper sowie deren Mischungen. Als Härterkomponente werden NH-funktionelle Substanzen eingesetzt wie beispielsweise Amine, Amide und Addukte aus Epoxidharzen und Aminen sowie deren Mischungen.

Ein zweikomponentiger Topcoat enthält als Bindemittelkomponente beispielsweise 10 bis 70%, bevorzugt 20 bis 60%, besonders bevorzugt 30 bis 40%, Polyole oder Epoxidharze, 0 bis 2%, bevorzugt 0 bis 1%, besonders bevorzugt 0 bis 0,5%, Mattierungsmittel, 0 bis 10%, bevorzugt 0 bis 5%, besonders bevorzugt 0 bis 3%, Wachse, 0 bis 5%, bevorzugt 0,1 bis 4%, besonders bevorzugt 0,1 bis 2%, Beschleuniger, 0 bis 3%, bevorzugt 0,1 bis 2%, besonders bevorzugt 0,1 bis 0,5%, Silicone, 0 bis 10%, bevorzugt 0 bis 2%, besonders bevorzugt 0 bis 0,5%, Pigmente und 0 bis 10%, bevorzugt 0 bis 2%, besonders bevorzugt 0 bis 0,5%, Farbstoffe, wobei sich die Prozentangaben auf die Gesamtmasse der Bindemittelkomponente beziehen. Zusätzlich können andere Additive wie Entschäumer und Lichtschutzmittel enthalten sein.

Als Härterkomponente können für polyolhaltige Bindemittel handelsübliche Isocyanathärter und für epoxidharzhaltige Bindemittel NH-funktionelle Härter eingesetzt werden.

Die Mischungsverhältnisse der Bindemittel- und Härterkomponenten werden dabei so gewählt, dass die Massen der jeweiligen Komponenten jeweils bezogen auf die Stoffmengen der reaktiven Gruppen in einem Verhältnis OH : NCO bzw. Epoxy : NH im Bereich von 1 : 0,7 bis 1 : 1,5 vorliegen. Bevorzugt sind Verhältnisse von 1 : 0,8 bis 1 : 1,2, besonders bevorzugt 1 : 1.

Eine weitere bevorzugte Ausführungsform der vorliegenden Erfindung weist eine weitere Schicht auf, welche aus ein oder mehreren Primern herstellbar ist und auf welcher die erste tintenhaltige Schicht aufgebracht ist.

Der erfindungsgemäße 3-Schichtaufbau kann in verschiedenen industriellen Bereichen eingesetzt werden. Grundlage sind Primer, die auf Holz, Metall, Glas und Kunststoffen appliziert werden können. Erfindungsgemäß geeignete Primer sind beispielsweise Produkte auf der Basis von einkomponentigen (1K) oder zweikomponentigen (2K) isocyanat-vernetzenden Systemen (Polyurethane) oder auf der Basis von 1K- oder 2K-Epoxy-Systemen (Epoxidharze). Erfindungsgemäß bevorzugt werden 2K-Systeme eingesetzt.

In zweikomponentigen, isocyanat-vernetzenden Systemen werden als Härterkomponente Isocyanate eingesetzt wie beispielsweise HDI-, MDI-, IPDI- oder TDI-basierte Oligomere wie z.B. Isocyanurate, Biuret, Allophanate und Addukte aus den genannten Isocyanaten mit multivalenten Alkoholen sowie deren Mischungen. Als Bindemittelkomponente werden Polyole eingesetzt wie beispielsweise OH-gruppenhaltige Polyester, Polyether, Acrylate und Polyurethane sowie deren Mischungen, wobei die Polyole lösemittelbasiert, lösemittelfrei oder wasserverdünnbar sein können.

In zweikomponentigen Epoxy-Systemen werden als Bindemittelkomponente Epoxidharze eingesetzt wie beispielsweise Glycidylether von Bisphenolen wie Bisphenol A oder F und epoxidierte aliphatische Grundkörper sowie deren, Mischungen. Als Härterkomponente werden NH-funktionelle Substanzen eingesetzt wie beispielsweise Amine, Amide und Addukte aus Epoxidharzen und Aminen sowie deren Mischungen.

Ein erfindungsgemäß bevorzugter, zweikomponentiger Primer enthält als Bindemittelkomponente beispielsweise 10 bis 70%, bevorzugt 20 bis 60%, besonders bevorzugt 30 bis 40%, Polyole oder Epoxidharze, 0 bis 10%, bevorzugt 0 bis 7%, besonders bevorzugt 0 bis 5%, Mattierungsmittel, 0 bis 5%, bevorzugt 0 bis 3%, Wachse, 0 bis 5%, bevorzugt 0,1 bis 4%, besonders bevorzugt 0,1 bis 2%, Beschleuniger, 0 bis 1%, bevorzugt 0 bis 0,8%, besonders bevorzugt 0 bis 0,5%, Dispergiermittel, 0 bis 3%, bevorzugt 0,1 bis 2, besonders bevorzugt 0,1 bis 1%, Benetzungsadditive, 0 bis 3%, bevorzugt 0,1 bis 2%, besonders bevorzugt 0,1 bis 0,5%, Silicone, 0 bis 60%, bevorzugt 1 bis 20%, besonders bevorzugt 1 bis 10%, Pigmente und 0 bis 60%, bevorzugt 0 bis 20%, besonders bevorzugt 1 bis 10%, Füllstoffe, wobei sich die Prozentangaben auf die Gesamtmasse der Bindemittelkomponente beziehen. Zusätzlich können weitere Additive wie Entschäumer und Haftvermittler für eine verbesserte Haftung auf dem jeweiligen Untergrund enthalten sein.

Als Härterkomponente können für polyolhaltige Bindemittel handelsübliche Isocyanathärter und für epoxidharzhaltige Bindemittel NH-funktionelle Härter eingesetzt werden.

Die Mischungsverhältnisse der Bindemittel- und Härterkomponenten werden dabei so gewählt, dass die Massen der jeweiligen Komponenten jeweils bezogen auf die Stoffmengen der reaktiven Gruppen in einem Verhältnis OH : NCO bzw. Epoxy : NH im Bereich von 1 : 0,7 bis 1 : 1,5 vorliegen. Bevorzugt sind Verhältnisse von 1 : 0,8 bis 1 : 1,2, besonders bevorzugt 1 : 1.

Auf diese Primer wird erfindungsgemäß das gewünschte Muster oder Dekor mit einer geeigneten Tinte mittels eines handelsüblichen Inkjet-Druckkopfes gedruckt. Anschließend wird die gedruckte Schicht mit einem geeigneten Topcoat versiegelt. Der Topcoat und der Primer werden bevorzugt über Sprühpistolen aufgebracht, wobei es besonders bevorzugt ist, den Topcoat ebenfalls durch Inkjet-Druckverfahren zu applizieren. Primer und Topcoat können jedoch auch mit den üblichen Applikationsverfahren wie sie dem Fachmann bekannt sind aufgebracht werden z.B. durch Coaten, Airbrush, Rakeln oder Walzen.

Erfindungsgemäß werden UV-härtende Tinten und UV-härtende Topcoats eingesetzt, damit die Bedruckung und Versiegelung eine Geschwindigkeit erreichen kann, die einem üblichen industriellen Prozess gerecht wird.

Mit dem erfindungsgemäß besonders bevorzugten 3-Schichtaufbau sind Inkjet-Bedruckungen auf Kunststoffen wie normalem ABS (Acrylnitril-Butadien-Styrol Copolymerisat) oder ABS-PC (Acrylnitril-Butadien-Styrol Copolymerisat mit Polycarbonat) und insbesondere auf kritischen Materialien wie beispielsweise Glas und Melamin z.B. Melaminlaminate oder melaminkaschierten Werkstoffe so beständig, dass sie den üblichen Möbelnormen und Automobilspezifikationen genügen.

Bisher ist die Erzeugung von haptischen Effekt wie z.B. durch Prägung nur bei sehr großen Volumen bzw. Stückzahlen wirtschaftlich. Es sind zwar zur bildlichen Individualisierung von Oberflächen digitale Technologien wie die Inkjet-Technologie in der Diskussion, jedoch konnte insbesondere noch keine haptische Individualisierung erzeugt werden, da die üblicherweise aufgetragenen Tintenmengen für einen haptischen Effekt zu gering sind. Selbst 100%-UV-Tinten-Systeme im Bereich der UV-Härtung erzeugen keine ausreichende Erhebung.

In der Regel werden daher für Objekte, welche mit der Inkjet-Technologie konstruiert werden, Hilfsmedien wie z.B. Quarzsand verwendet. Diese Hilfsmedien bauen das Objekt auf, der Inkjet-Drucker druckt lediglich eine "Klebstoff-Spur", die das Hilfsmedium zusammenhält. Der erfindungsgemäße 3-Schichtaufbau ermöglicht es nun, Haptik und bildliche bzw. farbliche Individualisierung in einem Prozessschritt zu vereinen.

Erfindungsgemäß wird in der ersten Schicht eine farbliche Darstellung wie ein Muster oder Dekor durch den Auftrag von UV-härtbaren Tinten mittels Inkjet-Druckers auf das Substrat aufgebracht. Besonders geeignet sind Tinten, die bei der Jetting-Temperatur eine Viskosität im Bereich vom 2 bis 80 mPas aufweisen.

Die anschließende Schicht, welche einen inkjet-fähigen UV-Lack als Topcoat enthält, wird ebenfalls mittels Inkjet-Drucker nur auf einige Stellen des Farbmusters aufgebracht. Dadurch kommt es zu einer Verbindung der visuellen, farblich und bildlich, Gestaltung mit einer dreidimensionalen Struktur mit einer haptischen Anmutung.

Der erfindungsgemäß zur Herstellung der zweiten Schicht eingesetzte Topcoat enthält bevorzugt 5 bis 50% Oligomer und 20 bis 80% mono-, di- und/oder trifuntionellen Reaktivverdünner bezogen auf die Masse des Topcoats.

Der erfindungsgemäße Topcoat darf den Untergrund nur partiell benetzen. Als Topcoat kann beispielsweise auch die nicht pigmentierte Variante der erfindungsgemäß eingesetzten UV-Tinte dienen. Die UV-härtenden Tinten wie beispielsweise CYMK werden mit handelsüblichen Druckern aufgetragen. Nach dem Druck der Tintenschicht kann der Aufbau gehärtet werden. Es ist erfindungsgemäß auch möglich lediglich ein Pinning vorzunehmen, so dass die Oberfläche angeliert wird, die Tinte aber noch nicht trocken ist. Anschließend wird über denselben oder einen modifizierten Inkjet-Druckkopf der Topcoat auf exakt die Positionen gedruckt, auf die vorher die farbige Tinte gedruckt wurde. Dies lässt sich beliebig oft wiederholen und erlaubt somit einen sukzessiven Aufbau von Schichtdicke, der Haptik mit bildlicher und farblicher Gestaltung verbindet.

Das erfindungsgemäße Verfahren umfasst die Schritte (a) das Aufdrucken zumindest einer tintenhaltigen Schicht mittels eines Inkjet-Druckers, (b) das Angelieren oder Einfrieren der Tinten durch Bestrahlung mit Licht einer Wellenlänge von 250 bis 450 nm, (c) das Aufbringen zumindest eines UV-härtenden Lacks oder Topcoats und (d) das Aushärten aller Schichten durch Bestrahlung mit UV-Licht. Dabei können sowohl mehrere tintenhaltige Schichten, beispielsweise in unterschiedlichen Farben, als auch mehrere topcoathaltige Schichten aufgebracht werden.

Erfindungsgemäß wird die tintenhaltige Schicht mittels eines Inkjet-Druckers aufgedruckt. Die Applikation der primerhaltigen und/oder der topcoathaltigen Schicht erfolgt nach einem der üblichen Applikationsverfahren wie Sprühen, Coaten, Airbrush, Rakeln und Walzen oder ebenfalls durch Aufdrucken mittels eines Inkjet-Druckers. Bevorzugt erfolgt die Applikation des Topcoats in den erfindungsgemäßen Schichtaufbauten durch Sprühapplikation oder durch Aufdrucken mittels Inkjet-Druckers. Insbesondere bei höheren Schichtaufbauten ist die Applikation mittels Inkjet-Verfahren besonders bevorzugt.

Auch können die Druckköpfe auf dreidimensional verfahrbare Aggregate oder Vorrichtungen wie z.B. Roboter oder einer ähnlichen Mimik aufgebracht werden, so dass auf diese Weise nicht nur plane Flächen sondern auch gekrümmte Flächen und dreidimensional geformte Gegenstände bedruckt werden können.

Die aufgebrachten Schichten werden im UV-Licht ausgehärtet, wobei die aufgebrachten Schichten vor dem Aufbringen der jeweils nächsten Schicht in einem Zwischenschritt mit Strahlung einer Wellenlänge zwischen 250 und 450 nm belichtet werden, z.B. mit LED, um die Oberfläche der Schicht einzufrieren (Pinning). Erst nach dem Aufbringen des Decklacks bzw. der Topcoatschicht wird der gesamte Aufbau ausgehärtet.

Die erfindungsgemäß erhaltenen Beschichtungen können in weiten Bereichen eingesetzt werden. Sie erlauben die individuelle Gestaltung von Oberflächen in sehr geringer Stückzahl ohne Umrüstkosten und ermöglichen damit weite gestalterische und designerische Freiheiten insbesondere auch durch die Kombination von farblichen und bildlicher mit haptischer Gestaltung.

Die erfindungsgemäßen Verfahren können ohne Weiteres in bestehende Lackierprozesse von Holz-, Glas-, Keramik,-Metall- und Kunststoffsubstraten integriert werden (inline-Prozess). Das erfindungsgemäße Verfahren ist insbesondere zur Lackierung von Kunststoffsubstraten geeignet, die hergestellt sind aus beispielsweise Vinylchlorid, Acryl-Butadien-Styrol Copolymerisat (ABS), Acryl-Butadien-Styrol Copolymerisat/Polycarbonat (ABS/PC), Polycarbonat (PC), Acrylnitril-Styrol-Acrylester (ASA), ungefülltem und gefülltem, z.B. mit Talkum, Polypropylen (PP), ungefülltem und gefülltem, z.B. mit Glasfasern oder Glaskugeln, Polyamid (PA), Polyoxymethylen (POM), Polybutylenterephthalat (PBT), thermoplastischen Polyester-Elastomeren (TPEE) und/oder Ethylen-Propylen-Dien-Kautschuk (PP/EPDM PP).

Bevorzugt wird das erfindungsgemäße Verfahren zur inline-Veredelung von Kunststoffoberflächen mit beliebiger Form, insbesondere PVC-Profilen, eingesetzt.

Die erfindungsgemäße Bedruckung wird beispielsweise im 4- oder Mehrfarbverfahren in einem Single-Pass-Verfahren im Anschluss an einen Extruder eingesetzt. Erfindungsgemäß bevorzugt werden UV-härtende Tinten verwendet, welche eine für die Produktionsgeschwindigkeit des jeweiligen Prozesses ausreichende Härtungsgeschwindigkeit aufweisen, beispielsweise zwischen 0,1 und 200 Meter pro Minute (m/min), bevorzugt zwischen 50 und 100 m/min. Weiterhin kann die Tintenschicht durch weitere Topcoatschichten geschützt werden. Die Topcoatschicht oder Topcoatschichten können ebenfalls im Inkjet-Verfahren aufgebracht werden. Es sind jedoch auch andere übliche Applikationsverfahren, wie sie dem Fachmann bekannt sind einsetzbar, wie z.B. Coaten, Airbrush oder Sprühen, Rakeln oder Walzen. Auch kann die Applikation durch Väkuumlackierung in einem Vakumaten erfolgen. Die Funktion des Vakumaten beruht dabei auf dem folgenden Prinzip. In einer Applikationskammer wird ein flüssiger Beschichtungsstoff wie z.B. eine Lackfarbe mit Hilfe der Sogwirkung eines angelegten Unterdrucks verwirbelt. Das zu beschichtende Substrat wird durch den so entstehenden Lacknebel transportiert. Es erfolgt von allen Seiten eine gleichmäßige Beschichtung.

Gegebenenfalls kann zur Verbesserung der Haftung auf dem Substrat ein Primer aufgebracht werden. Das erfindungsgemäße Verfahren ist beispielsweise dazu geeignet, eine Substratoberflächen mit einer gleichmäßigen Färbung zu versehen, um die Farbtoleranzen unterschiedlicher Rohstoffbatches und Produktionschargen auszugleichen. Um im Mehrschicht-Aufbau den Verlauf und die Benetzung sicher zu stellen, kann das Verfahren als Zwischenschritt einen weiteren Belichtungsprozess (Pinning) umfassen.

In den erfindungsgemäßen Inline-Verfahren werden Tinten mit einer Oberflächenspannung unter 35 mN/m, bevorzugt unter 30 mN/m, besonders bevorzugt unter 26 mN/m, eingesetzt.

Bevorzugt ist die Verwendung der erfindungsgemäßen Beschichtung auf Holz-, Glas-, Keramik,- Metall- und Kunststoffsubstraten, insbesondere auf Bauteilen für den Fahrzeugbau wie beispielsweise Karosseriebauteile, äußere Fahrzeugteile wie Stoßfänger, Rammschutzleisten oder Spiegel sowie auf Bauteilen zum Fahrzeuginnenausbau (Interiorteile) wie Zierleisten, Abdeckungen, Griffe, Knöpfe oder Konsolen. Weiterhin bevorzugt ist die Verwendung der erfindungsgemäßen Beschichtung im Bereich der Möbel wie beispielsweise zur Beschichtung von Möbeloberflächen.

Die erfindungsgemäßen Verfahren werden bevorzugt zur Bedruckung von dreidimensional geformten Teilen eingesetzt wie beispielsweise PVC-Profilen, insbesondere Fenster- und Türbauteilen.

### Beispiel 1: 3-Schichtaufbau

### Primer

Bindemittelkomponente (Bestandteile bezogen auf die Gesamtmasse der Bindemittelkomponente):

| | |
|---|---|
| Acrylat-Polyol | 22% |
| Mattierungsmittel | 5% |
| Beschleuniger | 0,2% |
| Benetzungsadditiv | 0,5% |
| Dispergierhilfsmittel | 0,2% |
| Entschäumer | 0,2% |
| Butylacetat | 61,9% |
| Solvent Naphtha | 10% |

### Härterkomponente:

handelsübliche Isocyanathärter in einem Mischungsverhältnis von 1:1

### Tinte

### (Bestandteile bezogen auf die Gesamtmasse der Tinte:)

| | |
|---|---|
| Pigment | 0 - 15% |
| Oligomer | 5 - 50% |
| Reaktivverdünner | 20 - 80% |
| weitere Additive | 0 - 5% |

### Topcoat

Bindemittelkomponente (Bestandteile bezogen auf die Gesamtmasse der Bindemittelkomponente):

| | |
|---|---|
| Acrylat-Polyol | 25% |
| Beschleuniger | 1% |
| Benetzungsadditive | 0,5% |
| Mattierungsmittel | 1% |
| Lichtschutzmittel | 1% |
| Solvent Naphtha | 20% |
| Butylacetat | 51,5% |

### Härterkomponente:

handelsübliche Isocyanathärter in einem Mischungsverhältnis von 1:1

### Substrat

### Glas, gereinigt mit Isopropylalkohol

Der Primer wurde durch Sprühen appliziert. Die Primerschicht wurde 24 Stunden bei Raumtemperatur getrocknet. Anschließend wurde die Tinte mittels Drucker ORXY der Firma Swissqprint aufgedruckt. Der Topcoat wurde mittels Sprühen appliziert. Der Aufbau wurde nach 7 Tagen mit folgenden Ergebnissen (s. Tabelle 1) geprüft:

**Tabelle 1:**

| **Prüfung** | **Sollwert** | **Ergebnis** |
|---|---|---|
| Gitterschnitt | ≤ 1 | in Ordnung |
| DIN EN ISO 2409 | | |
| Kondenswasserkonstantklima | Blasengrad 0 | in Ordnung |
| DIN EN ISO 6270-2 CH, 240 h, 40°C/>95% rel. Luftfeuchte anschließend Gitterschnitt (s.o.) | ≤ 1 | in Ordnung |
| ATLAS Suntest | Delta E < 5 | in Ordnung |
| 240 h mit Quarzfilter | | |
| Tropfentest Waschbenzin | 5 | in Ordnung |
| DIN EN ISO 105-A02 | | |
| Pflegebeständigkeitsprüfung DIN EN ISO 105-X12, 9 N, | Spur ≤ 1, Filz ≤ 1 | in Ordnung |
| Hubweg: 50 mm, 30 DH; Filz: 1 cm² Scheibenreiniger | | |
| Reibprüfung mit Crockmeter DIN EN ISO 105-X12, 9 N, | Spur = 0, Filz = 0 | in Ordnung |
| Hubweg: 50 mm, Filz: 1 cm² | | |
| Wärmelagerung 240 h, 90°C: | | |
| Optikänderung | | in Ordnung |
| DIN EN ISO 4628-1 | 0 | in Ordnung |
| Haptikänderung | | in Ordnung |
| DIN EN ISO 4628-1 | 0 | |
| Gitterschnitt DIN EN ISO 2409 | ≤ 1 | |
| Kratzbeständigkeit Erichsenstab 318 | kein | |
| DIN EN ISO 1518, 10 N, ∅ = 75 mm | Aufreißen | |

### Beispiel 2: 2-Schichtaufbau

### Tinte:

| **Bestandteil** | **Menge [%-Masse]** |
|---|---|
| Pigment | 0 - 15 |
| Oligomer | 5 - 50 |
| Reaktivverdünner (mono-, di- oder trifunktionell) | 20 - 80 |
| weitere Additive | 0 - 5 |

### Topcoat:

| **Bestandteil** | **Menge [%-Masse]** |
|---|---|
| Oligomer | 5 - 50 |
| Reaktiwerdünner (mono-, di- oder trifunktionell) | 20 - 80 |
| weitere Additive | 0 - 5 |

### Substrat

### PVC, gereinigt mit Isopropylalkohol (IPA)

Die Tinte wird über einen handelsüblichen Drucker wie z.B. Swissqprint ORXY oder Durst RHO aufgedruckt. Anschließend wird ein Topcoat mit einem Druckkopf z.B. der Firma Konica Minolta oder Fujifilm Dimatix oder ebenfalls mit einem handelsüblichen Drucker aufgebracht. Alternativ kann der Topcoat auch aufgesprüht werden. Der Aufbau wurde nach 7 Tagen mit folgenden Ergebnissen (s. Tabelle 2) geprüft:

**Tabelle 2:**

| **Prüfung** | **Sollwert** | **Ergebnis** |
|---|---|---|
| Gitterschnitt | ≤ 1 | in Ordnung |
| DIN EN ISO 2409 | | |
| Kondenswasserkonstantklima | Blasengrad 0 | in Ordnung |
| DIN EN ISO 6270-2 CH, 240 h, 40°C/>95% rel. Luftfeuchte anschließend Gitterschnitt (s.o.) | ≤ 1 | in Ordnung |
| ATLAS Suntest | Delta E < 5 | in Ordnung |
| 240 h mit Quarzfilter | | |
| Tropfentest Waschbenzin | 5 | in Ordnung |
| DIN EN ISO 105-A02 | | |
| Pflegebeständigkeitsprüfung | Spur ≤ 1, Filz ≤ 1 | in Ordnung |
| DIN EN ISO 105-X12, 9 N, | | |
| Hubweg: 50 mm, 30 DH; Filz: 1 cm² Scheibenreiniger | | |
| Reibprüfung mit Crockmeter | Spur = 0, Filz = 0 | in Ordnung |
| DIN EN ISO 105-X12, 9 N, | | |
| Hubweg: 50 mm, Filz: 1 cm² | | |
| Wärmelagerung 240 h, 90°C: | | |
| Optikänderung | | in Ordnung |
| DIN EN ISO 4628-1 | 0 | in Ordnung |
| Haptikänderung | | in Ordnung |
| DIN EN ISO 4628-1 | 0 | |
| Gitterschnitt DIN EN ISO 2409 | ≤ 1 | |
| Kratzbeständigkeit Erichsenstab 318 | kein | |
| DIN EN ISO 1518, 10 N, ∅ = 75 mm | Aufreißen | |

## Patentansprüche

1. Verfahren zum Aufbringen einer Beschichtung aufweisend eine erste Schicht, welche aus ein oder mehreren UV-härtenden Tinten herstellbar ist, und eine zweite Schicht, welche aus ein oder mehreren UV-härtenden Klarlacken herstellbar ist, auf eine Oberfläche umfassend die folgenden Schritte
(a) das Aufdrucken zumindest einer UV-härtenden Tinte mittels eines Inkjet-Druckers
(b) das Angelieren oder Einfrieren der Tinten durch Bestrahlung mit Licht aufweisend Wellenlängen von 250 bis 450 nm,
(c) das Aufbringen zumindest eines UV-härtenden Lacks oder Topcoats,
(d) das Aushärten der Tinten und der Klarlacke oder Topcoats durch Bestrahlung mit UV-Licht.

2. Verfahren nach Anspruch 1, **dadurch gekennzeichnet, dass** vor dem Aufdrucken der Tinte zumindest ein Primer zur Herstellung einer primerhaltigen Schicht auf die zu beschichtende Oberfläche oder auf das zu beschichtende Substrat aufgebracht wird.

3. Verfahren nach einem der Ansprüche 1 oder 2, **dadurch gekennzeichnet, dass** der oder die Klarlacke oder Topcoats mittels eines Inkjet-Druckers aufgedruckt wird oder durch Sprühen aufgebracht wird.

4. Verfahren nach einem der Ansprüche 1 bis 3 **dadurch gekennzeichnet, dass** der Primer mittels eines Inkjet-Druckers oder durch Sprühen aufgebracht wird.

5. Verfahren nach einem der Ansprüch 1 bis 4, **dadurch gekennzeichnet, dass** die Tinten und/oder Topcoats mittels eines in drei senkrecht zueinander liegenden Ebenen verfahrbaren Inkjet-Druckkopfes aufgedruckt werden.

6. Verfahren nach einem der Ansprüche 1 bis 5, **dadurch gekennzeichnet, dass** Kunststoffteile beschichtet werden, wobei die Kunststoffe ausgewählt sind aus der Gruppe enthaltend Kunststoffe hergestellt aus Vinylchlorid, Acryl-Butadien-Styrol Copolymerisat, Acryl-Butadien-Styrol Copolymerisat/Polycarbonat, Polycarbonat, Acrylnitril-Styrol-Acrylester, ungefülltem und gefülltem Polypropylen, ungefülltem und gefülltem Polyamid, Polyoxymethylen, Polybutylenterephthalat, thermoplastischen Polyester-Elastomeren und Ethylen-Propylen-Dien-Kautschuk.

7. Verfahren nach einem der Ansprüche 1 bis 6, **dadurch gekennzeichnet, dass** PVC-Profile beschichtet werden.

## Claims

1. A method of applying a coat comprising a first layer, which can be produced from one or several UV-hardening inks, and a second layer, which can be produced from one or several UV-hardening clear varnishes, on a surface comprising the following steps:
(a) imprinting of at least one UV-hardening ink by means of an inkjet printer
(b) pre-gellating or freezing of the inks by irradiation with light including wavelengths of 250 to 450 nm,
(c) applying of at least one UV-hardening varnish or top coat,
(d) curing of the inks and of the clear varnishes or top coats by irradiation with UV-light.

2. The method of claim 1, **characterised in that** at least one primer is applied on the surface to be coated or on the substrate to be coated, to obtain a layer containing a primer, before imprinting the ink.

3. The method according to one of the claims 1 or 2, **characterised in that** the clear varnishes or top coats are imprinted by means on an inkjet printer or coated by spraying.

4. A method according to one of the claims 1 to 3, **characterised in that** the primer is applied by means of an inkjet printer or by spaying.

5. A method according to one of the claims 1 to 4, **characterised in that** the inks and/or top coats are imprinted by means of an inkjet print head mobile in three planes vertical with respect to one another.

6. The method according to one of the claims 1 to 5, **characterised in that** plastic parts are coated, whereas the plastics are selected from the group comprising synthetic materials produced from vinyl chloride, acrylic butadiene styrene copolymerisate, acrylic butadiene styrene copolymerisate/polycarbonate, polycarbonate, acrylonitrile styrene acryl ester, unfilled and filled polypropylene, unfilled and filled polyamide, polyoxymethylene, polybutylene terephthalate, thermoplastic polyester elastomers and ethylene propylene diene rubber.

7. A method according to one of the claims 1 to 6, **characterised in that** PVC profiles are coated.

## Revendications

1. Procédé d'application d'un revêtement comprenant une première couche, que l'on peut obtenir à partir d'une ou de plusieurs encres durcissables aux UV, et une seconde couche, que l'on peut obtenir à partir d'un ou de plusieurs vernis transparents durcissables aux UV, sur une surface comprenant les étapes suivantes:
(a) empreinte d'au moins une encre durcissable aux UV à l'aide d'une imprimante à jet d'encre
(b) prégélification ou gélification des encres par irradiation à la lumière comprenant des longueurs d'ondes de 250 à 450 nm,
(c) application d'au moins un vernis ou une couche supérieure durcissable aux UV,
(d) Vulcanisation des encres et des vernis transparents ou couches supérieures par irradiation à la lumière UV.

2. Procédé selon la revendication 1, **caractérisée en ce que** l'on applique au moins un apprêt à la surface à revêtir ou au substrat à revêtir, pour obtenir une couche contenant un apprêt, avant d'imprimer l'encre.

3. Procédé selon l'une des revendications 1 ou 2, **caractérisée en ce que** le(s) vernis transparent(s) ou les couche(s) supérieure(s) sont imprimés à l'aide d'une imprimante à jet d'encre ou revêtus par pulvérisation.

4. Procédé selon l'une des revendications 1 à 3, **caractérisé en ce que** l'on applique l'apprêt à l'aide d'une imprimante à jet d'encre ou bien par pulvérisation.

5. Procédé selon l'une des revendications 1 à 4, **caractérisé en ce que** les encres et/ou les couches supérieures sont imprimées à l'aide d'une tête d'impression à jet d'encre mobile dans trois plans verticaux l'un par rapport à l'autre.

6. Procédé selon l'une des revendications 1 à 5, **caractérisé en ce que** les pièces plastiques sont des couches, où les matériaux synthétiques sont sélectionnés parmi le groupe comprenant des matériaux synthétiques produits à partir de chlorure de vinyle, de copolymérisat acrylique butadiène styrène, copolymérisat/polycarbonate acrylique butadiène styrène, polycarbonate, ester acrylonitrile styrène acrylique, polypropylène avec charge ou pas, polyamide avec charge ou pas, polyoxyméthylène, téréphthalate de polybutylène, élastomères de polyester thermoplastique et caoutchouc éthylène propylène diène.

7. Procédé selon l'une des revendications 1 à 6, **caractérisé en ce que** les profils PVC sont revêtus.
